# EUROPEAN PATENT APPLICATION

(11) **EP 0 859 364 A1**
(43) Date of publication of application: **19.08.1998**
(21) Application number: 98301157.8
(22) Date of filing: 17.02.1998
(51) Int. Cl.: G11B 23/087

(54) **Tape cassette**

(30) Priority: 18.02.1997 JP 48566/97
(71) Applicant: TDK Corporation, Chuo-ku, Tokyo (JP)
(72) Inventor: Shima, Motohiko, Saku-shi, Nagano (JP); Ikebe, Masaru, Saku-shi, Nagano (JP)
(74) Representative: Geering, Keith Edwin

(57) **Abstract**

A tape cassette capable of effectively preventing a front lid (4) from being brought into contact with a magnetic tape (1) irrespective of application of force of an increased level to the front lid (4) and keeping dust or the like from entering a space defined by a lid structure including the front lid (4), an upper lid (5) and a rear lid (6). The front lid (4) and upper lid (5) are respectively provided thereon with a first projection (4c) and a second projection (5b) which are opposite to each other when the lid structure is in a closed state. The first and second projections (4c, 5b) are arranged so as to laterally extend throughout a range corresponding to a width of the rear lid (6). When the front lid (4) is inwardly forced while the lid structure is kept closed, the first projection (4c) of the front lid (4) and the second projection (5b) of the upper lid (5) are abutted against each other, to thereby prevent inward deflection of the front lid (4). This eliminates contact between the front lid (4) and the tape (1), to thereby prevent damage to the tape (1).

## Description

### BACKGROUND OF THE INVENTION

This invention relates to a tape cassette such as, for example, a digital video cassette or the like which is suitable for use for a magnetic recording/regenerating apparatus, and more particularly to a tape cassette including a lid structure for covering a front surface of a tape, a rear surface thereof and an upper end thereof.

A tape cassette of such a type which has been conventionally used in the art often includes a lid structure which includes an upper lid for covering an upper end of a portion of a magnetic tape for information recording/reproducing traveling along a front opening of a cassette casing and front and rear lids for covering front and rear surfaces of the portion of the tape while receiving a pair of reel hubs having the magnetic tape wound thereon so as to stretchedly extend therebetween.

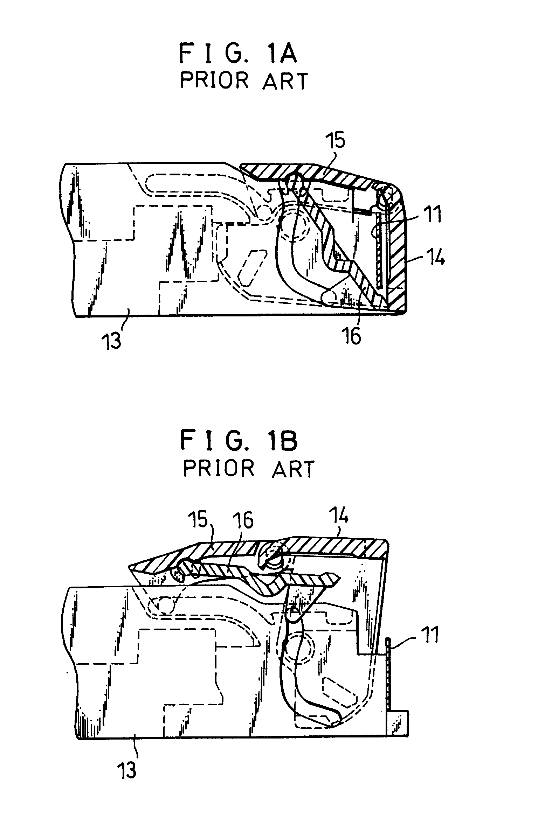

Such a lid structure incorporated in the conventional tape cassette may be constructed in such a manner as shown in Figs. 1A and 1B by way of example, wherein Fig. 1A shows the lid structure kept closed and Fig. 1B shows the lid structure kept open.

More particularly, the tape cassette includes a casing 13 which is formed on a front side thereof with an opening. In the example shown in Figs. 1A and 1B, the opening is arranged on a right-hand side of a front wall of the casing 13. A magnetic tape 11 wound on a pair of reel hubs (not shown) in a manner to stretchedly extend therebetween is arranged so as to travel through the opening. A portion of the tape 11 positioned in the opening is covered by a front lid 14, an upper lid 15 and a rear lid 16.

The front lid 14 is pivotally mounted on lateral sides of the casing 13. The upper lid 15 is arranged so as to be moved in association with the front lid 14 and the rear lid 16 is arranged so as to be moved in association with the upper lid 15.

Pivotal movement of the front lid 14 in a counter-clockwise direction in Figs. 1A and 1B permits a front side of the opening of the casing 13 to be open. Also, it permits the upper lid 15 to be rearwardly moved and the rear lid 16 to be upwardly moved. This results in the tape cassette taking a position shown in Fig. 1B, so that the portion of the magnetic tape 11 positioned in the opening of the casing 13 may be exposed, to thereby permit data to be read out of or written onto the magnetic tape 11.

Unfortunately, the conventional tape cassette thus constructed has a disadvantage in that deflection of the front lid 14 while the lid structure closes the opening of the casing 13 causes the front lid 14 to be brought into contact with the magnetic tape 11, leading to damage to the tape 11 and therefore breakage of the tape 11. In order to solve the problem, a tape cassette which is constructed so as to restrict or restrain such deflection of a front lid has been proposed as disclosed in Japanese Patent Application Laid-Open Publication No. 220441/1995.

More specifically, the proposed tape cassette is so constructed that an upper lid is provided on an outer edge of a front side thereof or an outer edge thereof in proximity to a front lid with a projection. Thus, rearward forcing of the front lid causes the front lid to be abutted against the projection of the upper lid, so that deflection of the front lid may be effectively restricted. This results in preventing the front lid from being brought into contact with a magnetic tape.

Nevertheless, the proposed tape cassette has an unavoidable disadvantage in that an increase in force for pressing the front lid causes damage to the projection, so that the front lid is deflected, to thereby be brought into contact with the magnetic tape, resulting in damage to the tape.

The proposed tape cassette has another disadvantage of tending to cause a gap to occur between an upper end of the front lid and a front end of the upper lid and/or between a lower end of the front lid and a front end of the rear lid, to thereby cause dust and the like to enter the tape cassette through the gap, leading to dropout of data from the magnetic tape.

Generally, conventional tape cassettes have a further disadvantage in that the front and upper lids have gate positions for molding thereof left at centers of upper and rear ends thereof, respectively. This permits the gate positions to be externally observed from above the tape cassette, leading to a deterioration in appearance of the tape cassette.

### SUMMARY OF THE INVENTION

The present invention has been made in view of the foregoing disadvantages of the prior art.

Accordingly, it is an object of the present invention to provide a tape cassette which is capable of effectively preventing a front lid from being brought into contact with a magnetic tape irrespective of application of force of an increased level to the front lid.

It is another object of the present invention to provide a tape cassette which is capable of eliminating formation of any gap between a front lid and an upper lid or a rear lid, to thereby prevent intrusion of dust and the like into the tape cassette.

It is a further object of the present invention to provide a tape cassette which is capable of substantially preventing gate positions of a lid structure from being conspicuously observed from the outside of the tape cassette.

In accordance with the present invention, a tape cassette is provided. The tape cassette includes a casing formed on a front side thereof with an opening and a pair of reel hubs rotatably received in the casing and having a tape wound thereon so as to stretchedly extend therebetween. The tape is arranged so as to travel between the reel hubs while being guided through the opening of the casing. The tape cassette further includes a lid structure including a front lid, an upper lid and a rear lid which are arranged so as to cover a front surface of a portion of the tape positioned in the opening of the casing, an upper end thereof and a rear surface thereof, respectively; a first projection provided on an outer edge of an upper side of the front lid, which edge is rendered opposite to an outer edge of a front side of the upper lid, so as to rearwardly project from the front lid when the lid structure is in a closed state, wherein the first projection is arranged so as to laterally extend throughout a range corresponding to a width of the rear lid; and a second projection provided on the outer edge of the front side of the upper lid so as to downwardly project therefrom and in a manner to be opposite to the first projection when the lid structure is in the closed state, wherein the second projection is arranged so as to be abutted against the first projection when the front lid is rearwardly forced.

In the tape cassette thus constructed according to the present invention, when the front lid is inwardly or rearwardly forced while the lid structure is kept closed, the first projection of the front lid and the second projection of the upper lid are abutted against each other, to thereby prevent inward deflection of the front lid. Also, the first and second projections substantially keep any gap from being formed between the front lid and the upper lid, to thereby prevent intrusion of dust or the like into a space defined by the lid structure.

In a preferred embodiment of the present invention, the tape cassette further includes an additional projection provided on a lower end of a rear side of the front lid so as to rearwardly project therefrom when the lid structure is in the closed state, wherein the additional projection is abutted against an upper edge of a lower end of a front side of the rear lid to tightly close lower end portions of the front lid and rear lid. Thus, the additional projection tightly closes a gap between the end portions of the front lid and rear lid, to thereby more positively prevent intrusion of dust into the space.

In a preferred embodiment of the present invention, the second projection of the upper lid is arranged so as to laterally extend throughout a range corresponding to the width of the rear lid.

In a preferred embodiment of the present invention, the additional projection of the front lid is arranged so as to laterally extend throughout a range corresponding to the width of the rear lid.

In a preferred embodiment of the present invention, the front lid has a gate position for molding thereof defined at a central portion of a lower end face thereof and the upper lid has a gate position for molding thereof defined on a rear end of a lateral side thereof. Such construction prevents the gate positions from being conspicuously observed from the outside of the tape cassette, to thereby improve an appearance of the tape cassette.

### BRIEF DESCRIPTION OF THE DRAWINGS

These and other objects and many of the attendant advantages of the present invention will be readily appreciated as the same becomes better understood by reference to the following detailed description when considered in connection with the accompanying drawings; wherein:
Fig. 1A is a fragmentary side elevation view in section showing a conventional tape cassette, wherein a lid structure is kept closed;
Fig. 1B is a fragmentary side elevation view in section of the conventional tape cassette, wherein the lid structure is kept open;
Fig. 2 is an exploded perspective view showing an embodiment of a tape cassette according to the present invention;
Fig. 3 is a perspective view showing a rear side of a front lid;
Fig. 4 is a perspective view showing a bottom side of an upper lid;
Fig. 5A is a fragmentary side elevation view in section of the tape cassette shown in Fig. 2, wherein a lid structure is kept closed; and
Fig. 5B is a fragmentary side elevation view in section of the tape cassette shown in Fig. 2, wherein the lid structure is kept open.

### DETAILED DESCRIPTION OF THE PREFERRED EMBODIMENT

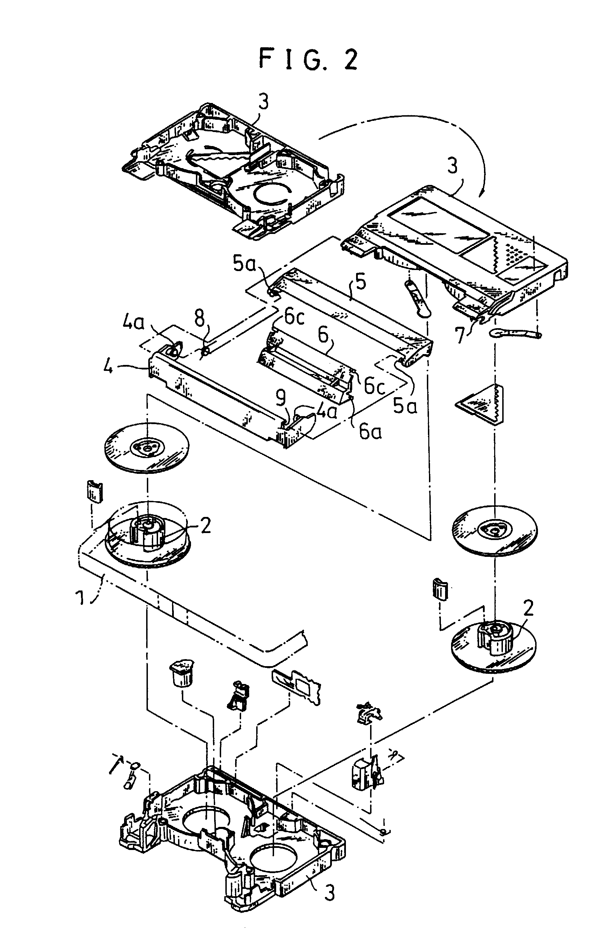

Now, a tape cassette according to the present invention will be described hereinafter with reference to Figs. 2 to 5B.

Referring first to Fig. 2, an embodiment of a tape cassette according to the present invention is generally illustrated. A tape cassette of the illustrated embodiment includes a casing 3 which is formed by joining an upper casing member and a lower casing member to each other and has a pair of reel hubs 2 rotatably received therein. The reel hubs 2 have a magnetic tape wound thereon so as to stretchedly extend therebetween. The casing 3 is formed at a front side thereof with an opening through which the magnetic tape 1 travels between the reel hubs 2. The magnetic tape 1 is selectively covered at a portion thereof positioned in the opening with a lid structure which is arranged so as to be open and closed. The lid structure includes a front lid 4, an upper lid 5 and a rear lid 6 which are arranged so as to cover a front surface of the portion of the tape 1 positioned in the opening of the casing 3, an upper end thereof and a rear surface thereof, respectively.

The front lid 4 is provided on an inner surface of opposite sides thereof with shafts 4a and correspondingly the upper casing member of the casing 3 is formed with recesses 7. Thus, the shafts 4a of the front lid 4 are pivotally supported in the recesses 7 of the upper casing member, respectively. This permits the front lid 4 to be pivotally moved about the shafts 4a with respect to the casing 3. A torsion coil spring 8 is arranged between one of the shafts 4a and the recess 7 of the casing 3 corresponding thereto so that the front lid 4 is urged in a direction of covering the tape 1.

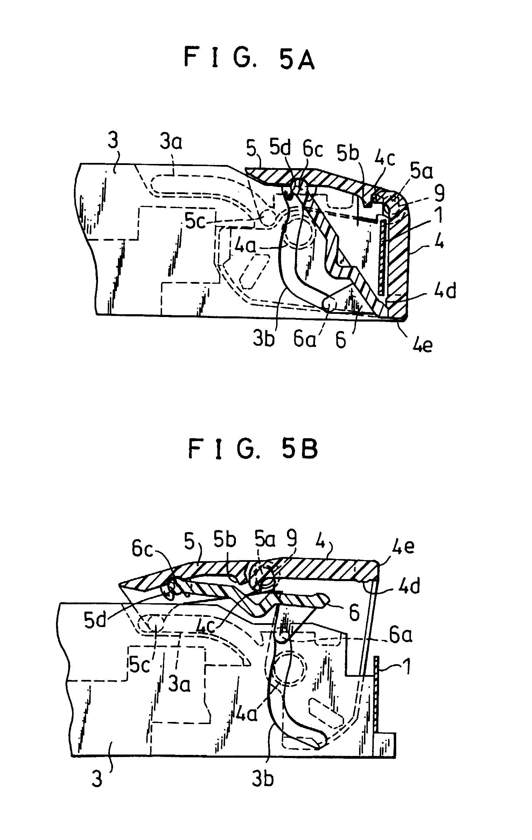

The upper lid 5 is provided on an inner surface of opposite lateral sides thereof with shafts 5a, which are adapted to be pivotally supported in fitting portions 9 formed on opposite ends of an upper part of a front side of the front lid 4, respectively. This permits the upper lid 5 to be pivotally moved about the shafts 5a with respect to the front lid 4. Also, the upper lid 5 is provided on the inner surface of the opposite lateral sides thereof with shafts 5c, which are adapted to be slidable in guide grooves 3a formed on opposite lateral sides of the casing 3, respectively, as shown in Figs. 5A and 5B.

The rear lid 6 is formed with such a width as to permit the rear lid 6 to enter the opening of the casing 3. More particularly, the rear lid 6 is formed to have a width or lateral length smaller than that of each of the front lid 4 and upper lid 5. The rear lid 6 is formed at an upper portion of opposite sides thereof with shafts 6c, which are fitted in recesses 5d formed in a lower surface of the upper lid 5, resulting in the rear lid 6 being pivotally moved about the shafts 6c with respect to the upper lid 5. Also, the rear lid 6 is provided at lower portions of the opposite lateral sides thereof with shafts 6a, which are movably arranged in guide grooves 3b formed on an inner surface of the casing 3 in proximity to the opening, as shown in Figs. 5A and 5B.

The front lid 4 is provided at predetermined positions thereof with a first projection 4c and an additional projection 4d and the upper lid 5 is provided at a predetermined position thereof with a second projection 5b. The first projection 4c is arranged at an outer edge of an upper side of the front lid 4 so as to rearwardly project therefrom when the lid structure is in a closed state. The additional projection 4d is arranged at a lower end of the rear surface of the front lid 4 so as to rearwardly project therefrom when the lid structure is kept closed. The second projection 5b is arranged at an outer edge of a front side of the inner surface of the upper lid 5 so as to downwardly project therefrom when the lid structure is kept closed. The projections 4c, 4d and 5b are provided so as to laterally extend throughout a range corresponding to the width of the rear lid 6, respectively.

The above-described construction and arrangement of the first and second projections 4c and 5b permits a rear surface of the first projection 4c of the front lid 4 and a front surface of the second projection 5b of the upper lid 5 to be arranged so as to be opposite to each other with a gap of a slight distance being defined therebetween. Thus, the lid structure substantially keeps dust or the like from intruding into a space defined by cooperation of the front lid 4, upper lid 5 and rear lid 6 with each other, to thereby prevent dropout of data from the tape and the like. Also, the additional projection 4d of the front lid 4 is kept abutted against an upper edge of a lower end of a front side of the rear lid 6 when the lid structure is kept closed, to thereby eliminate formation of any gap between lower end portions of the front lid 4 and rear lid 6, so that intrusion of dust or the like into the space may be more effectively prevented.

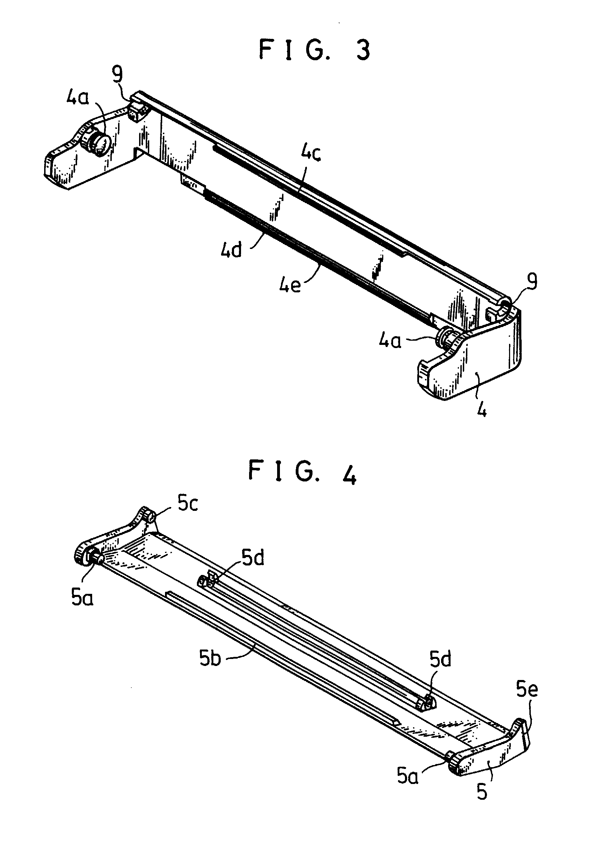

The front lid 4, upper lid 5 and the like are made by molding, to thereby cause gate positions to be left thereon. In this regard, the illustrated embodiment permits the front lid 4 to have a gate position 4e left on a central portion of a lower end face thereof as shown in Figs. 3 and 5A, to thereby keep the gate position 4e from being conspicuously observed from above the tape cassette, so that the tape cassette may exhibit a satisfactory appearance. As a part of the projection 4c of the front lid 4 is arranged farther away from the gate position 4e, a sink mark or the like would be possibly formed on a surface of the projection 4c due to insufficient migration of resin thereto during molding of the front lid 4. However, the illustrated embodiment is so constructed that the projection 4c is formed only within a range corresponding to the width of the rear lid 6 rather than over the whole width of the front lid 4. Such construction effectively prevents formation of such a sink mark or the like during the molding, to thereby provide the tape cassette with an improved appearance while ensuring that the projection 4c exhibits a satisfactory function.

In addition, the upper lid 5 has a gate position 5e for molding thereof defined on a rear end of a side surface thereof as shown in Fig. 4. Such arrangement of the gate position 5e renders observation of the gate position 5e from the outside difficult, to thereby likewise ensure a good appearance of the tape cassette.

Now, the manner of operation of the front lid 4, upper lid 5 and rear lid 6 will be described hereinafter with reference to Figs. 5A and 5B.

When the front lid 4 is pivotally moved about the shafts 4a in a counter-clockwise direction from a position shown in Fig. 5A wherein the lid structure is kept closed, the front side of the front lid 4 is upwardly moved. At this time, the upper lid 5 is moved in association with the front lid 4 and the rear lid 6 is moved in association with the upper lid 5. The shafts 5c of the upper lid 5 and the shafts 6a of the rear lid 6 are moved along the guide grooves 3a and 3b of the casing 3, respectively. This results in the front lid 4, upper lid 5 and rear lid 6 being in such a state as shown in Fig. 5B, so that the portion of the magnetic tape 1 positioned in the opening of the casing 3 may be exposed to permit data to be read out of or written onto the tape 1. During such movement of the lid structure, the first projection 4c of the front lid 4 and the second projection 5c of the upper lid 5 do not interfere with each other, so that opening operation of the lid structure may be smoothly carried out.

Transfer of the lid structure from the state shown in Fig. 5B to that of Fig. 5A is carried out in a manner contrary to the above.

When force is applied to the front lid 4 in an inward direction or in a left-hand direction in Fig. 5A while the tape 1 is kept covered with the lid structure as shown in Fig. 5A, the rear surface of the first projection 4c of the front lid 4 and the front surface of the second projection 5b are abutted against each other. The first and second projections 4c and 5b are arranged in a manner to be opposite to each other through the gap of a slight distance as described above, so that force of a slight magnitude permits the projections 4c and 5b to be abutted against each other. Further, the first projection 4c of the front lid 4 functions also as a rib which increases rigidity of the front lid 4. This substantially eliminates deflection of the front lid 4, to thereby prevent the front lid 4 from being brought into contact with the magnetic tape 1. Moreover, the first and second projections 4c and 5b are arranged throughout a range corresponding to the width of the rear lid 6, to thereby prevent an increase in deflection of the front lid 4 in a width direction thereof.

Further, the outer edge of the lower side of the front lid 4 in proximity to the additional projection 4d and the outer edge of the lower side of the rear lid 6 are kept abutted against each other, so that deflection of the front lid 4 may be further prevented.

The above description has been made in connection with the tape cassette having the magnetic tape received therein. However, the present invention may be of course applied to a head cleaning cassette having a cleaning tape received therein.

As can be seen from the foregoing, the tape cassette of the present invention is so constructed that the first projection of the front lid and the second projection of the upper lid may be abutted against each other when the front lid is inwardly forced while the lid structure is kept closed. Such construction prevents inward deflection of the front lid. This eliminates contact between the front lid and the tape-like medium, to thereby prevent damage to the tape-like medium. In addition, the first and second projections are arranged throughout a range corresponding to the width of the rear lid, so that any portion of the front lid may be prevented from being greatly deflected due to forcing of the front lid. Such arrangement of the first projection also prevents occurrence of any sink mark on the front lid during molding thereof, resulting in an appearance of the tape cassette being improved. Further, the first and second projections keep dust or the like from intruding into the space defined by the front lid, upper lid and rear lid, to thereby prevent dropout of data from the magnetic tape.

Moreover, the present invention may be so constructed that the additional projection of the front lid keeps any gap from being defined between the front lid and the rear lid. Such construction more effectively prevents intrusion of dust into the space.

In addition, the present invention may be constructed so as to render the gate positions on the front lid and upper lid hard to observe from the outside of the tape cassette. This permits an appearance of the tape cassette to be improved.

While a preferred embodiment of the invention has been described with a certain degree of particularity with reference to the drawings, obvious modifications and variations are possible in light of the above teachings. It is therefore to be understood that within the scope of the appended claims, the invention may be practiced otherwise than as specifically described.

## Claims

1. A tape cassette comprising:
a casing (3) formed on a front side thereof with an opening;
a pair of reel hubs (2) rotatably received in said casing (3) and having a tape (1) wound thereon so as to stretchedly extend therebetween, said tape (1) being arranged so as to travel between said reel hubs (2) while being guided through said opening of said casing (3);
a lid structure including a front lid (4), an upper lid (5) and a rear lid (6) which are arranged so as to cover a front surface of a portion of said tape (1) positioned in said opening of said casing (3), an upper end thereof and a rear surface thereof, respectively, characterized in that:
a first projection (4c) is provided on an outer edge of an upper side of said front lid (4), which edge is rendered opposite to an outer edge of a front side of said upper lid (5), so as to rearwardly project from said front lid (4) when said lid structure is in a closed state, said first projection (4c) being arranged so as to laterally extend throughout a range corresponding to a width of said rear lid (6); and
a second projection (5b) is provided on said outer edge of said front side of said upper lid (5) so as to downwardly project therefrom and in a manner to be opposite to said first projection (4c) when said lid structure is in the closed state, said second projection (5b) being arranged so as to be abutted against said first projection (4c) when said front lid (4) is rearwardly forced.

2. A tape cassette as defined in claim 1, wherein an additional projection (4d) is provided on a lower end of a rear side of said front lid (4) so as to rearwardly project therefrom when said lid structure is in the closed state; and
said additional projection (4d) is abutted against an upper edge of a lower end of a front side of said rear lid (6) to tightly close lower end portions of said front lid (4) and rear lid (6).

3. A tape cassette as defined in claim 1 or 2, wherein said second projection (5b) is arranged so as to laterally extend throughout a range corresponding to the width of said rear lid (6).

4. A tape cassette as defined in claim 2 or 3, wherein said additional projection (4d) is arranged so as to laterally extend throughout a range corresponding to the width of said rear lid (6).

5. A tape cassette as defined in any one of the preceding claims, wherein said front lid (4) has a gate position (4e) for molding thereof defined at a central portion of a lower end face thereof and said upper lid (5) has a gate position (5e) for molding thereof defined on a rear end of a lateral side thereof.
